# EUROPÄISCHE PATENTSCHRIFT

(11) **EP 3 826 753 B1**
(45) Veröffentlichungstag und Bekanntmachung des Hinweises auf die Patenterteilung: **26.01.2022**
(21) Anmeldenummer: 19749617.7
(22) Anmeldetag: 24.07.2019
(51) Int. Cl.: B01D 46/24, C04B 38/00, F01N 3/022, C04B 41/50, C04B 41/00, C04B 41/87, F01N 3/035, F01N 3/10, C04B 111/00

(54) **FILTERELEMENT FÜR EINEN PARTIKELFILTER SOWIE ABGASPARTIKELFILTER**
FILTER ELEMENT FOR A PARTICULATE FILTER, AND EXHAUST GAS PARTICULATE FILTER
ÉLÉMENT FILTRANT POUR FILTRE À PARTICULES ET FILTRE À PARTICULES DE GAZ D'ÉCHAPPEMENT

(30) Priorität: 25.07.2018 DE 102018212370
(43) Veröffentlichungstag der Anmeldung: 02.06.2021
(73) Patentinhaber: Audi AG, 85049 Ingolstadt (DE)
(72) Erfinder: TREMEL, Peter, 90461 Nürnberg (DE)
(86) Internationale Anmeldenummer: PCT/EP2019/069960
(87) Internationale Veröffentlichungsnummer: WO 2020/020967

(56) Entgegenhaltungen:
- EP-A1- 0 153 911
- EP-A1- 2 614 872
- JP-A- 2014 181 638
- US-A1- 2007 217 978

## Beschreibung

Die Erfindung betrifft ein Filterelement für einen Partikelfilter, mit einem eine Vielzahl von strömungstechnisch parallel verlaufenden Strömungskanälen aufweisenden porösen Filterkörper aus einem Keramikmaterial. Die Erfindung betrifft weiterhin einen Abgaspartikelfilter.

Aus dem Stand der Technik ist beispielsweise die Druckschrift DE 20 2006 017 355 U1 bekannt. Diese betrifft ein poröses keramisches Wabensubstrat mit einer Porosität in dem Bereich von etwa 60 % bis etwa 85 %, mit einer Struktur, die im Wesentlichen aus gebundenen keramischen Fasern gebildet ist, und ein Feld von wabenförmigen Kanälen aufweist, und wobei das Wabensubstrat durch einen Extrusionsprozess erzeugt wird, mit den Schritten: Mischen der Keramikmaterialfaser mit Additiven und einem Fluid, um ein extrudierbares Gemisch zu bilden; Extrudieren des extrudierbaren Gemisches zu einem wabenförmigen Grünkörper-Substrat; und Aushärten des Grünkörper-Substrats zu dem porösen Wabensubstrat.

Weiterhin beschreibt die Druckschrift EP 2 043 964 B1 eine poröse Keramikwabenstruktur mit einer primären Cordierit-Keramikphase, die Folgendes aufweist: Eᵣₐₜᵢₒ ≤ 1,01, wobei Eratio = E_{H}/E_{RT}, wobei E_{RT} ein Raumtemperatur-Elastizitätsmodul bei 25 °C und E_{H} ein Hochtemperatur-Elastizitätsmodul bei 1000 °C ist, und TSP ≥ 525 °C, wobei TSP ein Temperaturschockparameter ist, definiert als TSP = MOR_{RT}/[E_{RT}] [CTE_{H}], wobei MOR_{RT} eine Raumtemperatur-Reißfestigkeitsmodul und CTE_{H} ein Hochtemperatur-Wärmeausdehnungskoeffizient zwischen 500 und 900 °C ist, wobei die Struktur eine Gesamtporosität von ≥ 55 % aufweist.

Die Druckschrift JP 2014-181638 A beschreibt zudem einen Katalysator aus einem Dieselpartikelfilterbasismaterial, wobei auf eine Katalysatorschicht Montmorillonit mit einer spezifischen Oberfläche von höchstens 20 m²/g aufgebracht wird. Weitere Katalysatoren werden in den Druckschriften JP 03238046 A und US 2012/0294792 A1 beschrieben. Zudem sind aus dem Stand der Technik die Druckschriften US 2011/0229635 A1, US 2011/022634 A1 und US 2013/0260029 A1 bekannt.

Andere Filterelemente sind in den Dokumenten EP0153911 und US2007/217978 beschrieben.

Es ist Aufgabe der Erfindung, ein Filterelement für einen Partikelfilter vorzuschlagen, welches gegenüber bekannten Filterelementen Vorteile hat, insbesondere auch mit zunehmender Betriebsdauer einen geringen Druckverlust aufweist.

Dies wird erfindungsgemäß mit einem Filterelement für einen Partikelfilter mit den Merkmalen des Anspruchs 1 erreicht. Dabei ist vorgesehen, dass der Filterkörper zumindest in einem Teil der Strömungskanäle mit einer Beschichtung aus einem von dem Keramikmaterial verschiedenen Beschichtungsmaterial aus orthorhombischen Kristallen, nämlich Sepiolith, versehen ist, wobei die Beschichtung eine Außenschicht des Filterelements bildet. Das Filterelement ist vorzugsweise Bestandteil des Partikelfilters, welcher wiederum als Abgaspartikelfilter ausgestaltet sein kann. Der Abgaspartikelfilter ist beispielsweise Bestandteil einer Abgasanlage, welche wiederum einer abgaserzeugenden Einrichtung, insbesondere einem Antriebsaggregat einer Antriebseinrichtung, bevorzugt einer Brennkraftmaschine, zugeordnet sein kann. Die Antriebseinrichtung dient beispielsweise dem Antreiben des Kraftfahrzeugs, insoweit also dem Bereitstellen eines auf das Antreiben des Kraftfahrzeugs gerichteten Antriebsdrehmoments. Die abgaserzeugende Einrichtung beziehungsweise das Antriebsaggregat erzeugen während ihres Betriebs Abgas. Die Abgasanlage dient dem Abführen dieses Abgases von der abgaserzeugenden Einrichtung in Richtung einer beziehungsweise in eine Außenumgebung der Abgasanlage.

Die Abgasanlage weist mindestens eine Abgasnachbehandlungseinrichtung auf, nämlich den als Abgaspartikelfilter ausgestalteten Partikelfilter. Dieser dient dem Entfernen von Partikeln, beispielsweise Rußpartikeln, aus dem die Abgasanlage durchströmenden Abgas. Zusätzlich zu dem Partikelfilter kann selbstverständlich wenigstens eine weitere Abgasnachbehandlungseinrichtung, beispielsweise ein Fahrzeugkatalysator beziehungsweise ein katalytischer Konverter und/oder ein weiterer Partikelfilter, Bestandteil der Abgasanlage sein. Dem Partikelfilter wird das die Abgasanlage durchströmende Abgas zugeführt, insbesondere das gesamte Abgas. Das beschriebene Filterelement kann jedoch grundsätzlich für alle Arten von Partikelfiltern verwendet werden, beispielsweise liegt der Partikelfilter in Form eines Raumluftfilters eines Lüftungsgeräts, einer Klimaanlage oder dergleichen vor.

Das Filterelement verfügt über den Filterkörper, welcher porös ist beziehungsweise aus dem porösen Keramikmaterial besteht. In dem Filterkörper liegen zahlreiche Strömungskanäle vor, welche strömungstechnisch parallel angeordnet sind und vorzugsweise den Filterkörper jeweils vollständig durchgreifen. Besonders bevorzugt verlaufen die Strömungskanäle gerade, insbesondere durchgehend gerade. Beispielsweise durchgreifen sie einerseits eine erste Stirnseite des Filterkörpers und andererseits eine der ersten Stirnseite gegenüberliegende zweite Stirnseite des Filterkörpers. In anderen Worten erstrecken sich die Strömungskanäle jeweils ausgehend von der ersten Stirnseite bis hin zu der zweiten Stirnseite und durchgreifen diese jeweils.

Der Filterkörper dient dem Filtrieren eines Fluids, insbesondere des Abgases, und damit einem Abscheiden von in dem Fluid enthaltenen Partikeln. Der Filterkörper beziehungsweise das Keramikmaterial kann eine ungleichmäßige Porosität aufweisen. Das bedeutet, dass die die Filtrationsleistung des Filterkörpers bestimmenden Poren des Filterkörpers statistisch größenverteilt sind. Hieraus resultiert stets ein Kompromiss zwischen Filtrationsleistung und Gegendruck beziehungsweise Druckverlust, welcher von dem Filterkörper verursacht wird. Es kann vorgesehen sein, von Zeit zu Zeit eine Regeneration des Filterelements vorzunehmen, um die Partikel zumindest teilweise aus dem Filterelement auszutragen. Hierbei kann Asche entstehen, welche dauerhaft in dem Filterelement verbleibt. Zusätzlich kann Asche in das Filterelement eingetragen werden, welche durch die Verbrennung von Schmiermittel und/oder Additiven in dem Antriebsaggregat entstehen.

Der Filterkörper weist üblicherweise zwei Filtriermechanismen auf, nämlich eine Tiefenfiltration und eine Oberflächenfiltration. Bei der Tiefenfiltration erfolgt das Abscheiden der Partikel in einer zumindest einen der Strömungskanäle begrenzenden Wand des Filterkörpers beziehungsweise in dem Keramikmaterial. Bei der Oberflächenfiltration erfolgt die Filtration auf einer Oberfläche des Filterkörpers, also auf der Wand beziehungsweise auf dem Keramikmaterial. Die Tiefenfiltration ist verbunden mit einem hohen Gegendruckanstieg beziehungsweise hohen Druckverlust, weil aufgrund der Tiefenfiltration die Permeabilität des Abgases negativ beeinflusst wird.

Sind die in dem Filterkörper vorliegenden Poren aufgrund des Eintragens der Partikel durch die Tiefenfiltration teilweise oder vollständig mit Partikeln belegt, lagern sich die Partikel im Folgenden weitgehend im Zuge der Oberflächenfiltration auf dem Filterkörper ab. Über die Laufzeit verschiebt sich also die von dem Filterkörper bewirkte Filtrierung von der Tiefenfiltration hin zu der Oberflächenfiltration. Die Oberflächenfiltration führt bei gleichem Partikeleintrag in den Filterkörper zu einem geringeren Druckanstieg als die Tiefenfiltration.

Das Keramikmaterial, aus welchem der Filterkörper besteht, kann grundsätzlich beliebig gewählt sein. Vorzugsweise wird Siliziumcarbit oder Cordierit als Keramikmaterial verwendet oder das Keramikmaterial weist zumindest einen Anteil ein Siliziumcarbit und/oder Cordierit auf. Bevorzugt ist das Keramikmaterial ein faserverstärktes Keramikmaterial, sodass das Keramikmaterial Verstärkungsfasern, beispielsweise Mineralfasern, enthält. Die Verstärkungsfasern sind vorzugsweise in dem Filterkörper in einer bestimmten Richtung ausgerichtet, besonders bevorzugt parallel zu den Strömungskanälen.

Es kann vorgesehen sein, den Filterkörper mit einer Beschichtung aus Mineralien und/oder Mineralienverbindung zu versehen. Als Mineralien werden beispielsweise Al₂O₃, MgO, TiO₂ oder dergleichen verwendet. Eine solche Beschichtung bewirkt jedoch einen Anstieg des Gegendrucks beziehungsweise Druckverlusts, weil die Beschichtung in die Poren des Filterkörpers eindringt und die Permeabilität gegenüber dem Abgas erhöhen.

Aus diesem Grund ist es gemäß der Erfindung vorgesehen, den Filterkörper zumindest in einem Teil der Strömungskanäle, insbesondere in allen Strömungskanälen oder in lediglich einem Teil der Strömungskanäle, mit der Beschichtung zu versehen, welche aus dem Beschichtungsmaterial besteht. Die Beschichtung bildet eine Außenschicht des Filterelements, schließt also das Filterelement in die von dem Filterkörper abgewandte Richtung ab. Die Außenschicht ist eine äußerste Schicht des Filterelements. Es kann beispielsweise vorgesehen sein, dass zwischen dem Filterkörper und der Beschichtung wenigstens eine weitere Schicht vorliegt, die aus einem Material besteht, das sowohl von dem Keramikmaterial also auch von dem Beschichtungsmaterial verschieden ist. Bevorzugt bildet die weitere Schicht eine katalytisch wirksame Beschichtung beziehungsweise ein Katalysatorbeschichtung.

Die Beschichtung stellt denjenigen Bereich des Filterelements dar, welche bei einer Verwendung des Filterelements zum Filtrieren des Fluids zuerst von dem Fluid durchströmt wird. Die Beschichtung ist also derart angeordnet, dass sie bei der Verwendung des Filterelements beziehungsweise dem Betrieb des Partikelfilters, welchem das Filterelement zugeordnet ist, von dem Fluid direkt angeströmt beziehungsweise überströmt wird. Insoweit begrenzt die Beschichtung das Filterelement in die dem Fluid zugewandte Richtung. Hierdurch wird sichergestellt, dass die in dem Fluid enthaltenen Partikel im Wesentlichen oder vollständig durch Oberflächenfiltration von dem Filterelement, insbesondere der Beschichtung, aus dem Fluid ausgefiltert werden. Entsprechend wird die Tiefenfiltration zumindest teilweise oder sogar vollständig mithilfe der Beschichtung verhindert. Hieraus resultiert ein sehr geringer Druckverlust des Filterelements bei gleichzeitig deutlich gesteigerter Filtrationswirkung.

Unter der Außenschicht beziehungsweise der äußersten Schicht ist nicht zu verstehen, dass die Beschichtung notwendigerweise auf einem Außenumfang des Filterelements vorliegen muss, wenngleich dies selbstverständlich der Fall sein kann. Vielmehr liegt die Beschichtung in zumindest einem Teil der Strömungskanäle oder in allen der Strömungskanäle vor und bildet eine die entsprechenden Strömungskanäle in Richtung des Filterkörpers begrenzende Schicht. Das in den Strömungskanälen vorliegende Fluid wird also unmittelbar von der Beschichtung geführt und kann unmittelbar in die Beschichtung eintreten, insbesondere durch die Beschichtung in den Filterkörper einströmen. Die Beschichtung ist insoweit eine fluidführende Beschichtung, welche unmittelbar einer Führung des Fluids dient, insbesondere innerhalb der Strömungskanäle.

Das Beschichtungsmaterial ist von dem Keramikmaterial verschieden und besteht aus orthorhombischen Kristallen oder enthält zumindest orthorhombische Kristalle. Unter den orthorhombischen Kristallen sind Kristalle zu verstehen, welche Punktgruppen mit drei senkrecht aufeinander stehenden zweizähligen Dreh- oder Drehinversionsachsen aufweisen. Die in dem Beschichtungsmaterial enthaltenen Kristalle liegen insoweit in dem orthorhombischen Kristallsystem vor beziehungsweise gehören diesem an.

Die Verwendung der orthorhombischen Kristalle hat den Vorteil, dass diese nicht oder allenfalls geringfügig in die Poren des porösen Filterkörpers eindringen, sondern sich vielmehr an seiner Oberfläche anlagern. Die Kristalle verhindern insoweit während eines Betriebs des Filterelements beziehungsweise des Partikelfilters, dass Partikel in die Poren des Filterkörpers eindringen. Die vorstehend beschriebene Tiefenfiltration wird somit zumindest teilweise mithilfe der orthorhombischen Kristalle verhindert, sodass die Partikel im Wesentlichen durch Oberflächenfiltration von dem Filterelement aus dem Fluid ausgefiltert werden. Hierdurch wird ein Anstieg des Gegendrucks beziehungsweise Druckverlusts über die Betriebsdauer des Filterelements im Vergleich mit einem Filterelement, welches zumindest zeitweise überwiegend die Partikel mittels Tiefenfiltration ausfiltert, deutlich verringert. Insoweit wird eine deutliche Steigerung der Filtrationsleistung des Filterelements ohne signifikanten Anstieg des Gegendrucks erzielt. Zudem ist das Aufbringen des Beschichtungsmaterials auf den Filterkörper äußerst einfach möglich und kann beispielsweise rein mechanisch erfolgen.

Das Aufbringen der Beschichtung kann beispielsweise unmittelbar auf den Filterkörper erfolgen. Es kann jedoch auch vorgesehen sein, die Beschichtung auf eine katalytisch wirksame Beschichtung aufzubringen, die auch als Katalysatorbeschichtung bezeichnet werden kann. In diesem Fall ist es insoweit vorgesehen, den Filterkörper zunächst wenigstens bereichsweise mit der Katalysatorbeschichtung zu versehen, insbesondere in zumindest einem Teil der Strömungskanäle oder in allen Strömungskanälen. Anschließend wird die Beschichtung aufgebracht, nämlich wiederum zumindest in einem Teil der Strömungskanäle. Bevorzugt ist es hierbei vorgesehen, die Katalysatorbeschichtung in allen Strömungskanälen aufzubringen, die Beschichtung jedoch nur in einem Teil der Strömungskanäle, also nicht in allen Strömungskanälen. Die Katalysatorbeschichtung kann in Form einer Drei-Wege-Beschichtung beziehungsweise eine Drei-Wege-Katalysatorbeschichtung vorliegen.

Die Erfindung sieht vor, dass das Beschichtungsmaterial eine spezifische Oberfläche von mindestens 200 m²/g aufweist . Eine weitere Ausgestaltung der Erfindung sieht vor, dass das Beschichtungsmaterial Partikel mit einer Korngröße von mindestens 1 µm bis höchstens 20 µm aufweist . Erfindung sieht vor, dass eine auf den Filterkörper aufgebrachte Materialmenge des Beschichtungsmaterials bezogen auf ein Gesamtvolumen des Filterkörpers 2 g/l bis 5 g/l beträgt. Die spezifische Oberfläche des Beschichtungsmaterials ist bevorzugt deutlich größer als die spezifische Oberfläche des Keramikmaterials beziehungsweise des Filterkörpers. Durch das Aufbringen des Beschichtungsmaterials auf den Filterkörper in Form der Beschichtung kann insoweit die Filtrationsleistung des Filterkörpers deutlich verbessert werden.

Das Beschichtungsmaterial verfügt über die spezifische Oberfläche von mindestens 200 m²/g, mindestens 250 m²/g, mindestens 300 m²/g, mindestens 350 m²/g oder mindestens 400 m²/g. Durch eine derartige Wahl des Beschichtungsmaterials wird eine besonders hohe Filtrationsleistung des Filterkörpers erzielt. Zusätzlich kann das Beschichtungsmaterial vor seinem Aufbringen auf den Filterkörper Partikel mit einer Korngröße von mindestens 1 µm bis höchstens 20 µm aufweisen.

Die Korngröße beträgt insoweit mindestens 1 µm, mindestens 2,5 µm oder mindestens 5 µm. Zusätzlich oder alternativ beträgt die Korngröße höchstens 20 µm, höchstens 15 µm oder höchstens 10 µm. Besonders bevorzugt beträgt die Korngröße zwischen 5 µm und 10 µm. Die Korngröße des Beschichtungsmaterials wird bevorzugt in Abhängigkeit von einer Porengröße der Poren des Filterkörpers gewählt. Insbesondere ist die Korngröße der Partikel des Beschichtungsmaterials größer als die mittlere Porengröße des Filterkörpers. Die Korngröße bezeichnet beispielsweise die mittlere Partikelgröße D50.

Erfindungsgemäß beträgt die gesamte auf den Filterkörper aufgebrachte Materialmenge des Beschichtungsmaterials - bezogen auf das Gesamtvolumen des Filterkörpers - 2 g/l bis 5 g/l, vorzugsweise 3 g/l bis 4 g/l. Unter dem Gesamtvolumen des Filterkörpers ist vorzugsweise das geometrische Volumen des Filterkörpers zu verstehen oder alternativ das Volumen des Keramikmaterials, aus welchem der Filterkörper besteht. Die beschriebene Materialmenge ermöglicht eine besonders deutliche Erhöhung der Filtrationsleistung.

Eine weitere Ausgestaltung der Erfindung sieht vor, dass die Beschichtung durch Zerstäuben und Ansaugen des Beschichtungsmaterials mechanisch aufgebracht ist. Das Aufbringen der Beschichtung erfolgt durch Erzeugen eines Fluidstroms durch den Filterkörper, nämlich durch Bereitstellen eines Unterdrucks auf einer Seite des Filterkörpers. Aufgrund des Unterdrucks wird der Fluidstrom durch den Filterkörper bewirkt, wobei das Fluid auf einer ersten Seite des Filterkörpers angesaugt und hin zu einer zweiten Seite strömt, auf welcher der Unterdruck vorliegt. Auf der zweiten Seite liegt beispielsweise Umgebungsdruck vor.

Das Beschichtungsmaterial wird nun derart in den Fluidstrom eingebracht, dass es angesaugt und in den Filterkörper eingesaugt wird. Hierbei lagert sich das Beschichtungsmaterial an dem Filterkörper ab, insbesondere an einer die Strömungskanäle begrenzenden Wand des Filterkörpers. Das Aufbringen der Beschichtung aus dem Beschichtungsmaterial erfolgt insoweit rein mechanisch, ist also besonders einfach realisierbar. Zusätzlich kann es selbstverständlich vorgesehen sein, das Beschichtungsmaterial chemisch zu fixieren, beispielsweise mittels eines Klebstoffs oder dergleichen.

Beispielsweise ist es vorgesehen, dass auf einer Einlassseite des Filterkörpers mehrere der Strömungskanäle mittels erster Verschlussstopfen sowie auf einer Auslassseite des Filterkörpers mehrere der Strömungskanäle mittels zweiter Verschlussstopfen verschlossen sind. Die ersten Verschlussstopfen sind näher an der Einlassseite angeordnet als die zweiten Verschlussstopfen. Umgekehrt sind die zweiten Verschlussstopfen näher an der Auslassseite angeordnet als die ersten Verschlussstopfen. Beispielweise ist ein Teil der Strömungskanäle mittels der auf der Einlassseite angeordneten ersten Verschlussstopfen verschlossen, wohingegen ein anderer Teil der Strömungskanäle mittels der auf der Auslassseite angeordneten zweiten Verschlussstopfen verschlossen ist. Bevorzugt liegt also in jedem der Strömungskanäle entweder ein erster Verschlussstopfen oder ein zweiter Verschlussstopfen vor.

Es kann vorgesehen sein, die Beschichtung vor dem Einbringen der Verschlussstopfen in die Strömungskanäle auszubilden, also das Beschichtungsmaterial in die Strömungskanäle einzubringen, bevor die Verschlussstopfen in ihnen angeordnet werden. Bei einer solchen Vorgehensweise lagert sich das in den Fluidstrom eingebrachte Beschichtungsmaterial in allen Strömungskanälen ab, weil der Fluidstrom alle Strömungskanäle gleichmäßig durchströmt. Alternativ kann es vorgesehen sein, die Verschlussstopfen bereits vor dem Ausbilden der Beschichtung in den Strömungskanälen anzuordnen. Hierbei kann es vorgesehen sein, alle ersten Verschlussstopfen, nicht jedoch die zweiten Verschlussstopfen, alle zweiten Verschlussstopfen, nicht jedoch die ersten Verschlussstopfen, oder sowohl die ersten Verschlussstopfen als auch die zweiten Verschlussstopfen in den Strömungskanälen anzuordnen. Die vorstehend genannte erste Seite entspricht beispielsweise der Einlassseite und die zweite Seite der Auslassseite, sodass der Fluidstrom den Filterkörper von der Einlassseite in Richtung der Auslassseite durchströmt.

Je nachdem, welche der Verschlussstopfen in dem Filterkörper bereits angeordnet sind, trifft der Fluidstrom unmittelbar auf die Wand des Filterkörpers, welche die Strömungskanäle begrenzt, oder muss zunächst den porösen Filterkörper durchströmen. Bei dem Durchströmen des Filterkörpers wird das Beschichtungsmaterial von dem Fluidstrom separiert, sodass es sich auf der Wand des Filterkörpers ablagert. Das bedeutet, dass das Beschichtungsmaterial nachfolgend lediglich dort an dem Filterkörper vorliegt, wo der Fluidstrom unmittelbar auf die Wand des Filterkörpers trifft. Bei der vorstehend beschriebenen Strömungsrichtung von der Einlassseite hin zu der Auslassseite lagert sich das Beschichtungsmaterial also bei Vorliegen sowohl der ersten Verschlussstopfen als auch der zweiten Verschlussstopfen lediglich in denjenigen Strömungskanälen ab, die mittels der zweiten Verschlussstopfen verschlossen sind. In den mittels der ersten Verschlussstopfen verschlossenen Strömungskanälen lagert sich kein Beschichtungsmaterial ab, weil dieses bereits vor dem Eintreten in diese durch das Hindurchtreten durch die Wand beziehungsweise den Filterkörper aus dem Fluidstrom abgeschieden wurde.

Im Rahmen einer weiteren bevorzugten Ausgestaltung der Erfindung ist vorgesehen, dass das Beschichtungsmaterial derart auf den Filterkörper aufgebracht ist, dass die Beschichtung luftige Haufwerke aus dem Beschichtungsmaterial aufweist. Die Haufwerke zeichnen sich insbesondere dadurch aus, dass sich die Partikel des Beschichtungsmaterials während des Aufbringens auf den Filterkörper aneinander verhaken, sodass vor dem Aufbringen des Beschichtungsmaterials die in dem Beschichtungsmaterial enthaltenen einzelnen Partikel eine kleinere Korngröße aufweisen als nach dem Ausbilden der Beschichtung. Beispielsweise ist die Korngröße der Partikel nach dem Erzeugen der Beschichtung auf dem Filterkörper um einen Faktor von mindestens 2, mindestens 2,5 oder mindestens 3 größer als die Korngröße der Partikel vor dem Aufbringen auf den Filterkörper, insbesondere unmittelbar vor dem Aufbringen.

Die Ausbildung der luftigen Haufwerke aus dem Beschichtungsmaterial wird insbesondere durch eine bestimmte Strömungsgeschwindigkeit des Fluidstroms durch den Filterkörper erzielt. Beispielsweise ist eine Strömungsgeschwindigkeit von 2 m/s bis 6 m/s, insbesondere 3 m/s bis 4 m/s vorgesehen. Bei einer größeren Strömungsgeschwindigkeit bilden sich größere Ansammlungen der Partikel auf dem Filterkörper aus, welche den Gegendruck des Filterelements negativ beeinflussen. Bei einer niedrigeren Strömungsgeschwindigkeit werden die Partikel hingegen flächendeckend auf dem Filterkörper verteilt. Auch dies beeinflusst den Gegendruck negativ. Die Anordnung der Partikel des Beschichtungsmaterials in Form der luftigen Haufwerke, welche schlussendlich die Beschichtung ausbilden, hat insoweit den Vorteil, dass eine hohe Filtrationsleistung bei gleichzeitig geringem Gegendruck erzielt wird.

Die Erfindung sieht vor, dass das Beschichtungsmaterial ein Schichtsilikat aufweist. Unter dem Schichtsilikat ist ein Silikat zu verstehen, dessen Silikatanionen aus Schichten eckenverknüpfter SiO₄-Tetraeder bestehen. Die Verwendung des Schichtsilikats als Bestandteil des Beschichtungsmaterials hat den Vorteil einer besonders hohen Filtrationsleistung.

Gemäß der Erfindung ist vorgesehen, dass das Schichtsilikat Sepiolith ist. Das Sepiolith ist ein Magnesiumsilikat und gehört zu den Schichtsilikaten. Es kristallisiert im orthorhombischen Kristallsystem. Das Sepiolith kann in unterschiedlichen Verarbeitungsformen als Beschichtungsmaterial Verwendung finden. Die Verwendung des Sepioliths als Schichtsilikat beziehungsweise als Beschichtungsmaterial ermöglicht eine besonders hohe Filtrationsleistung bei gleichzeitig geringem Gegendruck. Selbstverständlich kann das Beschichtungsmaterial zusätzlich zu dem Sepiolith wenigstens einen Zusatzstoff enthalten. Bevorzugt enthält das Beschichtungsmaterial jedoch hauptsächlich Sepiolith, also mehr als 50 Vol.-%, mindestens 75 Vol.-%, mindestens 90 Vol.-%, mindestens 95 Vol.-%, mindestens 98 Vol.-% oder mindestens 99 Vol.-%. Beispielsweise besteht das Beschichtungsmaterial also aus Sepiolith mit unvermeidbaren Verunreinigungen, wobei letztere beispielsweise einen Anteil von höchstens 5 Vol.-%, höchstens 2 Vol.-% oder höchstens 1 Vol.-% aufweisen. Das Beschichtungsmaterial kann auch ausschließlich aus Sepiolith bestehen.

Die Erfindung betrifft weiterhin einen Partikelfilter, mit einem einen Fluideinlass und einen Fluidauslass aufweisenden Gehäuse und einem in dem Gehäuse angeordneten Filterelement, insbesondere einem Filterelement gemäß den Ausführungen im Rahmen dieser Beschreibung, wobei das Filterelement über einen eine Vielzahl von strömungstechnisch parallel verlaufenden Strömungskanälen aufweisenden porösen Filterkörper aus einem Keramikmaterial verfügt. Dabei ist vorgesehen, dass der Filterkörper zumindest in einem Teil der Strömungskanäle mit einer Beschichtung aus einem von dem Keramikmaterial verschiedenen Beschichtungsmaterial aus orthorhombischen Kristallen, nämlich Sepiolith, versehen ist, wobei die Beschichtung eine Außenschicht des Filterelements bildet.

Auf die Vorteile einer derartigen Ausgestaltung des Partikelfilters beziehungsweise des Filterelements wurde bereits hingewiesen. Sowohl der Partikelfilter als auch das Filterelement können gemäß den Ausführungen im Rahmen dieser Beschreibung weitergebildet sein, sodass insoweit auf diese verwiesen wird.

Der Partikelfilter verfügt über das Gehäuse sowie das Filterelement, das in dem Gehäuse angeordnet ist. Das Gehäuse umgreift das Filterelement vorzugsweise vollständig, insbesondere in Umfangsrichtung bezüglich einer Längsmittelachse des Filterelements. Das Gehäuse weist den Fluideinlass sowie den Fluidauslass auf. Dem Fluideinlass ist dabei beispielsweise ein Fluideinlassanschluss und dem Fluidauslass ein Fluidauslassanschluss zugeordnet, wobei über den Fluideinlassanschluss und den Fluidauslassanschluss dem Partikelfilter zu filterndes Fluid zuführbar und aus ihm abführbar ist. Beispielsweise ist über den Fluideinlassanschluss und den Fluidauslassanschluss jeweils eine Abgasleitung der bereits beschriebenen Abgasanlage an den Fluideinlass und den Fluidauslass angeschlossen. In diesem Fall kann der Partikelfilter auch als Abgaspartikelfilter bezeichnet werden.

Das Keramikmaterial, aus welchem der poröse Filterkörper besteht, ist beispielsweise Siliziumcarbit (SiC), Cordierit oder ein ähnliches Material. Der Filterkörper wird zum Beispiel durch Extrudieren aus dem Keramikmaterial hergestellt. Bei dem Extrudieren können auch die strömungstechnisch parallel verlaufenden Strömungskanäle in dem Filterkörper ausgebildet werden. Das Ausbilden des Filterkörpers umfasst beispielsweise einen Trocknungsprozess und/oder einen Brennprozess. Dies ist insbesondere der Fall, falls der Partikelfilter beziehungsweise der Filterkörper aus Keramik besteht.

Über wenigstens einen Teil der Strömungskanäle ist der Fluideinlass mit dem Fluidauslass strömungsverbunden. In dem Filterkörper ist hierzu eine große Anzahl an solchen Strömungskanälen ausgebildet. Der Filterkörper ist vorzugsweise durchgehend ausgebildet. Hierunter ist zu verstehen, dass er in Richtung seiner Längsmittelachse unterbrechungsfrei ist, sich also nicht aus mehreren in axialer Richtung beabstandet voneinander angeordneten Filterkörperteilen zusammensetzt. Es kann jedoch vorgesehen sein, dass der Filterkörper mehrere Filterkörper aufweist beziehungsweise sich aus diesen zusammensetzt, wobei die Filterkörperteile in axialer Richtung unmittelbar aufeinanderfolgen und hierbei in axialer Richtung aneinander anliegen.

Zur Erzielung einer besonders guten Filterleistung des Partikelfilters ist es vorgesehen, dass das den Partikelfilter durchströmende Fluid zu einem Wechsel der Strömungskanäle während seines Durchströmens des Partikelfilters gezwungen wird. In anderen Worten strömt das Fluid in einen der Strömungskanäle ein, wird zum Überströmen aus dem einen der Strömungskanäle in einen anderen der Strömungskanäle durch den Filterkörper beziehungsweise das Keramikmaterial hindurch gezwungen und tritt durch diesen anderen der Strömungskanäle aus dem Filterkörper aus. Der Wechsel der Strömungskanäle wird durch das Verschließen zumindest eines Teils der Strömungskanäle mittels Verschlussstopfen erzielt. Strömt das Fluid in den mittels des Verschlussstopfens verschlossenen Strömungskanal ein, so muss es durch den porösen Filterkörper hindurch in den anderen der Strömungskanäle überströmen, durch welchen es anschließend hin zu dem Fluidauslass strömen kann.

Hierzu ist es bevorzugt vorgesehen, dass auf einer dem Fluideinlass zugewandten Einlassseite des Filterkörpers mehrere der Strömungskanäle mittels erster Verschlussstopfen sowie auf einer dem Fluidauslass zugewandten Auslassseite mehrere der Strömungskanäle mittels zweiter Verschlussstopfen verschlossen sind. Für das Verschließen der Strömungskanäle des Filterkörpers sind also die ersten Verschlussstopfen und die zweiten Verschlussstopfen vorgesehen. Die ersten Verschlussstopfen sind auf der Einlassseite des Filterkörpers und die zweiten Verschlussstopfen auf der Auslassseite des Filterkörpers angeordnet. Zumindest sind die ersten Verschlussstopfen näher an der Einlassseite angeordnet als die zweiten Verschlussstopfen und umgekehrt die zweiten Verschlussstopfen näher an der Auslassseite als die ersten Verschlussstopfen. Die Einlassseite ist die dem Fluideinlass zugewandte Seite des Filterkörpers, die Auslassseite die dem Fluidauslass zugewandte Seite des Filterkörpers.

Es kann nun vorgesehen sein, dass ein Teil der Strömungskanäle mittels der auf der Einlassseite angeordneten ersten Verschlussstopfen verschlossen ist und dass zumindest ein Teil der Strömungskanäle, welche nicht mittels eines ersten Verschlussstopfens verschlossen sind, mit den auf der Auslassseite vorliegenden zweiten Verschlussstopfen verschlossen ist. In anderen Worten erfolgt das Verschließen der Strömungskanäle in diesem Fall entweder mittels eines der ersten Verschlussstopfen oder mittels eines der zweiten Verschlussstopfen. Besonders bevorzugt sind in jedem der Strömungskanäle wenigstens einer der ersten Verschlussstopfen oder wenigstens einer der zweiten Verschlussstopfen angeordnet, sodass alle Strömungskanäle entweder einlassseitig oder auslassseitig verschlossen sind. Bei einer derartigen Ausgestaltung des Partikelfilters durchtritt das Fluid üblicherweise den Filterkörper lediglich einmalig; es wird also ein einmaliger Wechsel der Strömungskanäle durch das Fluid erzielt. Hierdurch ergibt sich ein geringer Gegendruck.

Beschrieben wird zudem ein Verfahren zum Herstellen eines Filterelements, insbesondere eines Filterelements im Rahmen dieser Beschreibung, wobei das Filterelement über einen eine Vielzahl von strömungstechnisch parallel verlaufenden Strömungskanälen aufweisenden porösen Filterkörper aus einem Keramikmaterial verfügt. Dabei ist vorgesehen, dass der Filterkörper zumindest in einem Teil der Strömungskanäle mit einer Beschichtung aus einem von dem Keramikmaterial verschiedenen Beschichtungsmaterial aus orthorhombischen Kristallen, nämlich Sepiolith, versehen wird, wobei die Beschichtung eine Außenschicht des Filterelements bildet. Erneut wird hinsichtlich der Vorteile und möglicher bevorzugter Ausgestaltungen auf die Ausführungen im Rahmen dieser Beschreibung verwiesen.

Eine weitere Ausführungsform des Verfahrens sieht vor, dass der Filterkörper mit der Beschichtung versehen wird, indem ein Fluidstrom durch den Filterkörper erzeugt wird, durch den das Beschichtungsmaterial stromaufwärts des Filterkörpers angesaugt wird. Wie bereits erläutert, wird der Fluidstrom vorzugsweise durch Erzeugen eines Unterdrucks auf einer Seite des Filterkörpers erzeugt. Das Beschichtungsmaterial wird nun auf der jeweils anderen Seite des Filterkörpers in den Fluidstrom eingebracht, sodass das Beschichtungsmaterial in Richtung des Filterkörpers gesaugt wird. Auf der Seite, auf welcher das Beschichtungsmaterial in den Fluidstrom eingebracht wird, liegt zum Beispiel Umgebungsdruck vor. Der Fluidstrom wird vorzugsweise derart erzeugt, dass er eine Strömungsgeschwindigkeit durch den Filterkörper von 2 m/s bis 6 m/s aufweist. Hierdurch wird eine besonders vorteilhafte Anordnung des Beschichtungsmaterials in Form der luftigen Haufwerke auf dem Filterkörper erzielt.

Schließlich kann im Rahmen einer weiteren Ausgestaltung des Verfahrens vorgesehen sein, dass das Beschichtungsmaterial vor dem Einbringen in den Luftstrom mittels einer Druckstrahleinrichtung zerstäubt wird. Als Druckstrahleinrichtung kommt beispielsweise eine übliche Sandstrahlpistole zum Einsatz. Die Druckstrahleinrichtung zerstäubt das Beschichtungsmaterial mittels eines Gasstroms, beispielsweise eines Luftstroms. Bevorzugt wird zum Zerstäuben des Beschichtungsmaterials ein Prozessdruck der Druckstrahleinrichtung von 2 bar bis 6 bar verwendet. Hierdurch wird das Beschichtungsmaterial zuverlässig in einzelne Partikel aufgebrochen. Diese einzelnen Partikel können sich nachfolgend an dem Filterkörper in Form der luftigen Haufwerke ansammeln, sodass eine hohe Filtrationsleistung des Filterelements beziehungsweise Partikelfilters bei gleichzeitig geringem Gegendruck erzielt wird.

Zudem wird die Verwendung eines Beschichtungsmaterials aus orthorhombischen Kristallen zum Beschichten eines Filterelements beschrieben, insbesondere eines Filterelements gemäß den Ausführungen im Rahmen dieser Beschreibung. Das Beschichtungsmaterial und das zum Beschichten verwendete Verfahren können gemäß den Ausführungen im Rahmen dieser Beschreibung weitergebildet sein. Erneut wird daher auf diese verwiesen.

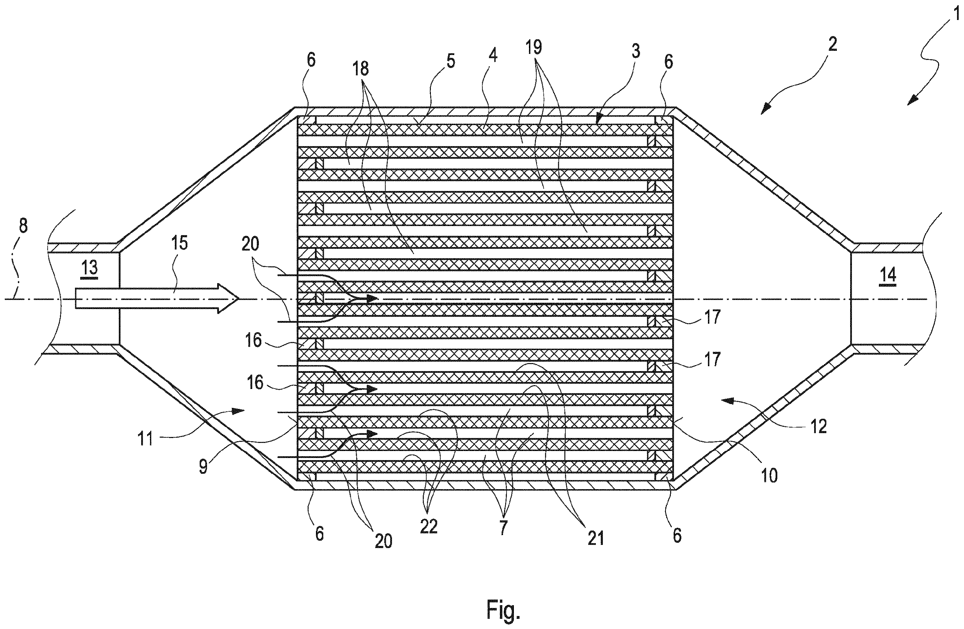

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Schnittdarstellung eines Partikelfilters, insbesondere für eine Abgasanlage.

Die Figur zeigt eine schematische Längsschnittdarstellung eines Partikelfilters 1, beispielsweise für eine Abgasanlage. Der Partikelfilter 1 verfügt über ein Gehäuse 2, welches hier lediglich angedeutet ist. Das Gehäuse 2 kann auch als "Canning" bezeichnet werden und besteht vorzugsweise aus Metall. In dem Gehäuse 2 ist ein Filterelement 3 angeordnet, das einen porösen Filterkörper 4 aus einem Keramikmaterial aufweist. Der Filterkörper 3 weist in dem hier dargestellten Ausführungsbeispiel eine Mantelfläche 5 auf, die beispielsweise in Form einer Beschichtung und/oder durch entsprechende Bearbeitung des Filterkörpers 3 realisiert ist. Beispielsweise ist die Mantelfläche 5 fluiddicht, verschließt also den Filterkörper 3 in radialer Richtung nach außen. Der Filterkörper 3 ist bevorzugt derart in dem Gehäuse 2 angeordnet, dass seine Mantelfläche 5 von dem Gehäuse 2 beabstandet angeordnet ist, beispielsweise durch Abstandshalter 6. Alternativ kann jedoch auch eine Ausgestaltung des Partikelfilters 1 realisiert sein, bei welcher die Mantelfläche 5 des Filterelements 3 an einer Innenumfangsfläche des Gehäuses 2 anliegt, insbesondere in Umfangsrichtung durchgehend.

In dem Filterkörper 4 ist eine Vielzahl von strömungstechnisch parallel verlaufenden Strömungskanälen 7 ausgebildet, von welchen hier lediglich einige beispielhaft gekennzeichnet sind. Es ist erkennbar, dass das Filterelement 3 bezüglich seiner Längsmittelachse 8 zylindrisch, insbesondere kreiszylindrisch, ist. Auch andere Ausgestaltungen des Filterelements 3, beispielsweise eine konische Gestalt, sind jedoch realisierbar. Das Filterelement 3 weist stirnseitig zwei Flächen 9 und 10 auf, die über die Mantelfläche 5 miteinander verbunden sind. Im Falle der zylindrischen beziehungsweise kreiszylindrischen Ausgestaltung des Filterelements 3 weisen die Flächen 9 und 10 denselben Flächeninhalt oder zumindest einen ähnlichen Flächeninhalt auf.

Die Fläche 9 liegt auf einer Einlassseite 11 und die Fläche 10 auf einer Auslassseite 12 des Filterelements 3 vor. Die Einlassseite 11 des Filterelements 3 ist einem Fluideinlass 13 des Gehäuses 2 zugewandt, wohingegen die Auslassseite 12 einem Fluidauslass 14 des Gehäuses 2 zugewandt ist. Eine Strömungsrichtung des Abgases durch den Partikelfilter 1 beziehungsweise das Filterelement 3 ist durch den Pfeil 15 angedeutet. Die Strömungskanäle 7, die in dem Filterelement 3 beziehungsweise dem Filterelement 4 vorliegen, sind mit ersten Verschlussstopfen 16 und zweiten Verschlussstopfen 17 versehen, von welchen hier jeweils einige beispielhaft gekennzeichnet sind. Die ersten Verschlussstopfen 16 liegen in einer ersten Stopfenebene und die zweiten Verschlussstopfen 17 in einer zweiten Stopfenebene.

Die Strömungskanäle 7 können in erste Strömungskanäle und zweite Strömungskanäle 19 aufgeteilt werden, von welchen jeweils lediglich einige beispielhaft gekennzeichnet sind. Bevorzugt setzen sich die Strömungskanäle 7 lediglich aus ersten Strömungskanälen 18 und zweiten Strömungskanälen 19 zusammen. Vorzugsweise liegen in dem Filterkörper 4 ebenso viele erste Strömungskanäle 18 wie zweite Strömungskanäle 19 beziehungsweise umgekehrt vor. Es kann jedoch auch vorgesehen sein, dass die Anzahl der ersten Strömungskanäle 18 von der Anzahl der zweiten Strömungskanäle 19 abweicht, vorzugsweise jedoch lediglich um höchstens 10 %, höchstens 7,5 %, höchstens 5 %, höchstens 2,5 % oder höchstens 1 %.

In jedem der ersten Strömungskanäle 18 ist einer der ersten Verschlussstopfen 16, jedoch keiner der zweiten Verschlussstopfen 17 angeordnet. In jedem der zweiten Strömungskanäle 19 ist hingegen keiner der ersten Verschlussstopfen 16, jedoch einer der zweiten Verschlussstopfen 17 angeordnet. Das bedeutet, dass die ersten Strömungskanäle 18 eingangsseitig verschlossen und ausgangsseitig offen sind, wohingegen die zweiten Strömungskanäle 19 eingangsseitig offen und ausgangsseitig verschlossen sind. Eine sich daraus ergebende Durchströmung des Filterelements 3 ist durch die Pfeile 20 angedeutet.

Es ist nun vorgesehen, dass der Filterkörper 4 zumindest in einem Teil der Strömungskanäle 7 mit einer Beschichtung 21 versehen ist, die aus einem Beschichtungsmaterial besteht, welches von einem Keramikmaterial des Filterkörpers 4 verschieden ist. Das Beschichtungsmaterial weist orthorhombische Kristalle auf und besteht insoweit zumindest teilweise aus einem Material, insbesondere aus einem mineralischen Material, welches solche orthorhombische Kristalle enthält. Mithilfe dieser Beschichtung 21 wird die Filtrationsleistung des Partikelfilters 1 bei geringem Gegendruck beziehungsweise geringem Druckverlust deutlich verbessert. Es kann vorgesehen sein, die Beschichtung 21 auf den Filterkörper 4 aufzubringen, bevor die Strömungskanäle 7 mit den Verschlussstopfen 16 und 17 verschlossen werden. Dies ermöglicht eine besonders einfache Herstellung des Partikelfilters 1. Es kann jedoch auch vorgesehen sein, die Beschichtung 21 erst auf den Filterkörper 4 aufzubringen, nachdem die Strömungskanäle 7 mit den Verschlussstopfen 16 und 17 verschlossen sind. Hierdurch wird die Beschichtung 21 lediglich in denjenigen Strömungskanälen 7 ausgebildet, welche mit den Verschlussstopfen 17 verschlossen sind, in welchen also keine Verschlussstopfen 16 vorliegen. In anderen Worten wird die Beschichtung 21 lediglich in den zweiten Strömungskanälen 19, nicht jedoch in den ersten Strömungskanälen 18 ausgebildet.

Besonders bevorzugt wird der Filterkörper 4 zumindest in den Strömungskanälen 7 mit einer Katalysatorbeschichtung 22 versehen, bevor die Beschichtung 21 aufgebracht wird. Die Katalysatorbeschichtung ist eine katalytisch wirksame Beschichtung, insbesondere eine Drei-Wege-Beschichtung, sodass der dortige Filter 1 sowohl als Partikelfilter als auch als Drei-Wege-Katalysator arbeitet. Nach dem Aufbringen der Katalysatorbeschichtung 22 wird die Beschichtung 21 aufgebracht, nämlich gemäß den vorstehenden Ausführungen. Entsprechend ergibt sich beispielsweise ein Filterkörper 4, in welchem die Katalysatorbeschichtung 22 lediglich teilweise mit der Beschichtung 21 versehen ist. Ein Teil der Katalysatorbeschichtung 22 ist insoweit mit der Beschichtung 21 versehen, wohingegen ein anderer Teil der Katalysatorbeschichtung 22 beschichtungsfrei ist. Bevorzugt ist die Katalysatorbeschichtung 22 nur in den zweiten Strömungskanälen 19 mit der Beschichtung 21 versehen, wohingegen sie in den ersten Strömungskanälen 18 beschichtungsfrei vorliegt.

In jedem Fall - also sowohl bei einer Ausgestaltung mit Katalysatorbeschichtung 24 also auch bei einer Ausgestaltung ohne diese - stellt die Beschichtung 21 eine Außenschicht des Filterelements dar, insbesondere im Schnitt gesehen. Die Beschichtung 21 begrenzt also nach vollständiger Herstellung des Filterelements 3 und/oder des Partikelfilters 1 das Filterelement 3 in Richtung des Fluids und schließt ihn insoweit in dieser Richtung ab. Auf die Beschichtung 21 folgt im Schnitt gesehen insoweit keine weitere Schicht. Vielmehr wird bei einem Durchströmen des Filterelements 3 mit Fluid, insbesondere während eines Betriebs des Partikelfilters 1, die Beschichtung 21 unmittelbar von dem Fluid angeströmt und/oder überströmt und schließlich in Richtung des Filterkörpers 4 durchströmt. Das Fluid dringt also durch die Beschichtung 21 in das Filterelement 3 ein, nämlich insbesondere aus den Strömungskanälen 7 oder zumindest einem Teil der Strömungskanälen 7.

### BEZUGSZEICHENLISTE

- 1: Partikelfilter
- 2: Gehäuse
- 3: Filterelement
- 4: Filterkörper
- 5: Mantelfläche
- 6: Abstandshalter
- 7: Strömungskanal
- 8: Längsmittelachse
- 9: Fläche
- 10: Fläche
- 11: Einlassseite
- 12: Auslassseite
- 13: Fluideinlass
- 14: Fluidauslass
- 15: Pfeil
- 16: 1. Verschlussstopfen
- 17: 2. Verschlussstopfen
- 18: 1. Strömungskanal
- 19: 2. Strömungskanal
- 20: Pfeil
- 21: Beschichtung
- 22: Katalysatorbeschichtung

## Patentansprüche

1. Filterelement (3) für einen Partikelfilter (1), mit einem eine Vielzahl von strömungstechnisch parallel verlaufenden Strömungskanälen (7) aufweisenden porösen Filterkörper (4) aus einem Keramikmaterial, **dadurch gekennzeichnet, dass** der Filterkörper (4) zumindest in einem Teil der Strömungskanäle (7) mit einer mechanisch aufgebrachten Beschichtung (21) aus einem von dem Keramikmaterial verschiedenen Beschichtungsmaterial aus orthorhombischen Kristallen, nämlich Sepiolith, versehen ist, wobei die Beschichtung (21) eine Außenschicht des Filterelements (3) bildet, das Beschichtungsmaterial eine spezifische Oberfläche von mindestens 200 m²/g aufweist und eine auf den Filterkörper (4) aufgebrachte Materialmenge des Beschichtungsmaterials bezogen auf ein Gesamtvolumen des Filterkörpers (4) 2 g/l bis 5 g/l beträgt.

2. Filterelement nach Anspruch 1, **dadurch gekennzeichnet, dass** das Beschichtungsmaterial Partikel mit einer Korngröße von mindestens 1 µm bis höchstens 20 µm aufweist.

3. Filterelement nach einem der vorhergehenden Ansprüche, **dadurch gekennzeichnet, dass** das Beschichtungsmaterial derart auf den Filterkörper (4) aufgebracht ist, dass die Beschichtung (21) luftige Haufwerke aus dem Beschichtungsmaterial aufweist.

4. Partikelfilter (1), mit einem einen Fluideinlass (13) und einen Fluidauslass (14) aufweisenden Gehäuse (2) und einem in dem Gehäuse (2) angeordneten Filterelement (3) nach einem oder mehreren der vorhergehenden Ansprüche.

## Claims

1. Filter element (3) for a particle filter (1) having a porous filter body (4), made of a ceramic material, having a multiplicity of flow ducts (7) running in parallel in terms of flow technology, **characterised in that** the filter body (4) is equipped at least in a part of the flow channels (7) with a mechanically applied coating (21) of a coating material, different from the ceramic material, made of orthorhombic crystals, specifically sepiolite, wherein the coating (21) forms an outer layer of the filter element (3), the coating material has a specific surface of at least 200 m²/g and a material quantity of the coating material applied to the filter body (4) is 2 g/l to 5 g/l in relation to the total volume of the filter body (4).

2. Filter element according to claim 1, **characterised in that** the coating material has particles with a particle size of at least 1 µm to maximum 20 µm.

3. Filter element according to any of the preceding claims, **characterised in that** the coating material is applied to the filter body (4) such that the coating (21) has airy heaps made of the coating material.

4. Particle filter having a housing (2) having a fluid inlet (13) and a fluid outlet (14) and, arranged in the housing (2), a filter element (3) according to one or more of the preceding claims.

## Revendications

1. Élément filtrant (3) pour un filtre à particules (1), avec un corps filtrant (4) poreux en matériau céramique présentant une pluralité de canaux d'écoulement (7) qui s'étendent en parallèle en termes de technique d'écoulement, **caractérisé en ce que** le corps filtrant (4) est doté d'au moins dans une partie des canaux d'écoulement (7) d'un revêtement (21) appliqué mécaniquement constitué d'un matériau de revêtement en cristaux orthorhombiques, différent du matériau céramique, notamment de la sépiolite, dans lequel le revêtement (21) forme une couche extérieure de l'élément filtrant (3), le matériau de revêtement présente une surface spécifique d'au moins 200 m²/g et une quantité de matériau du matériau de revêtement appliquée sur le corps filtrant (4) s'élève à 2 g/l à 5 g/l rapporté à un volume total du corps filtrant (4).

2. Élément filtrant (3) selon la revendication 1, **caractérisé en ce que** le matériau de revêtement présente des particules avec une granulométrie d'au moins 1 µm à 20 µm au maximum.

3. Élément filtrant (3) selon l'une quelconque des revendications précédentes, **caractérisé en ce que** le matériau de revêtement est posé sur le corps filtrant (4) de telle sorte que le revêtement (21) présente des agrégats aériens issus du matériau de revêtement.

4. Élément filtrant (3), avec un réceptacle (2) présentant une entrée de fluide (13) et une sortie de fluide (14) et un élément filtrant (3) agencé dans le réceptacle (2) selon l'une quelconque ou plusieurs des revendications précédentes.
